# EUROPÄISCHE PATENTSCHRIFT

(11) **EP 2 125 834 B1**
(45) Veröffentlichungstag und Bekanntmachung des Hinweises auf die Patenterteilung: **25.08.2010**
(21) Anmeldenummer: 08701286.0
(22) Anmeldetag: 08.01.2008
(51) Int. Cl.: C07F 7/08, C08G 77/00

(54) **VERFAHREN ZUR HERSTELLUNG POLYMERISIERBARER SILICONE**
METHOD FOR THE PRODUCTION OF POLYMERISABLE SILICONES
PROCÉDÉ DE PRÉPARATION DE SILICONES POLYMÉRISABLES

(30) Priorität: 24.01.2007 DE 102007003579
(43) Veröffentlichungstag der Anmeldung: 02.12.2009
(73) Patentinhaber: Wacker Chemie AG, 81737 München (DE)
(72) Erfinder: JANDKE, Markus, 84508 Burgkirchen (DE); KOOPMANN, Florian, 84489 Burghausen (DE); PESCHANEL, Birgit, 84489 Burghausen (DE)
(74) Vertreter: Deffner-Lehner, Maria
(86) Internationale Anmeldenummer: PCT/EP2008/050110
(87) Internationale Veröffentlichungsnummer: WO 2008/090013

(56) Entgegenhaltungen:
- EP-A- 1 510 520
- EP-B1- 1 472 264
- JP-A- 2000 186 095

## Beschreibung

Die Erfindung betrifft die Herstellung von polymerisierbaren Siliconen enthaltend siloxysubstituierte Silanstrukturen. Insbesondere betrifft die Erfindung die Herstellung von polymerisierbaren Gruppen aufweisenden, mit Triorganosiloxygruppen substituierten Silanen hoher Reinheit durch Substitution von Alkoxysilanen mit Disiloxanen.

Polymerisierbare Silicone, wie 3-Acryloxypropyltris(trimethylsiloxy)silan, 3-Methacryloxypropyltris(trimethylsiloxy)silan, 3-Methacryloxypropyltris(dimethylphenylsiloxy)silan, 1-Methacryloxymethyltris(trimethylsiloxy)silan, etc. sind nützlich als Rohstoff bzw. Monomer für die Herstellung elektronischer Materialien, zur Herstellung von Kontaktlinsen, als Rohstoff in Zusammensetzungen für funktionale und industrielle Beschichtungen, polymere Mikrostrukturen oder Kosmetikanwendungen.

Die Anwendung polymerisierbarer Silicone als Rohstoff bzw. Monomer für die Herstellung elektronischer Materialien, zur Herstellung von Kontaktlinsen und optischen Bauteilen, als Rohstoff in Zusammensetzungen für funktionale und industrielle Beschichtungen, für polymere Mikrostrukturen oder Kosmetikanwendungen erfordert die Bereitstellung hochreiner Materialien mit einem reduzierten Gehalt an Nebenprodukten wie Monohydroxysilanen, Monoorganoxysilanen und difunktionellen Disiloxanen sowie anorganischen und metallischen Verunreinigungen.

In JP 11-217389 wird ein Verfahren beschrieben, indem ein Alkoxy- oder Aryloxy-substituiertes Silicon (z. B. 3-Methacryloxypropyl-trimethoxysilan) mit Hexamethyldisiloxan in Gegenwart einer Carbonsäure (z. B. Essigsäure) und eines sauren Katalysators (Trifluormethansulfonsäure) umgesetzt wird, wobei ein Siloxy-substitutiertes Produkt erhalten wird. Das Verfahren ist vorzugsweise so konzipiert, dass Hexamethyldisiloxan, Carbonsäure und Katalysator vorgelegt werden, bevor die Alkoxy- oder Aryloxykomponente zugesetzt und die Reaktion bei ca. 20-70°C durchgeführt wird. Durch die Zugabe einer kleinen Menge an Hexamethyldisilazan (0,0025 mol pro mol Alkoxysilan) wird die Reaktion gestoppt und neutralisiert, wobei ein Produkt mit einer reduzierten Reinheit (< 90 Fl.%) erhalten wird.

Das Verhältnis von Produkt G-Si(OSiMe₃)₃ [G=Methacryloxypropyl-] zum Monoorganoxy-Nebenprodukt G-Si(OMe)(OSiMe₃)₂ beträgt ca. 8,3 (d.h. ca. 10,7% Monoorganoxynebenprodukt), das Verhältnis von Produkt zum difunktionellen Nebenprodukt G-[Me₃SiO]₂Si-O-Si[OSiMe₃]₂-G beträgt 54,9 (d.h. ca. 1,8 % difunktionelles Disiloxan). Es wird beschrieben, wie durch entsprechende Temperaturführung die Kondensation vorhandener Silanolgruppen zu difunktionalem Disiloxan unterdrückt wird, allerdings nicht wie der Gehalt an Monohydroxysilan (Silanol) limitiert werden kann. Der hohe Gehalt an Verunreinigungen ist problematisch hinsichtlich der oben genannten Anwendungen.

Aus JP 2000-186095 ist bekannt, Hexamethyldisiloxan, eine Carbonsäure (Essigsäure) und eine starke Säure (konzentrierte Schwefelsäure) umzusetzen mit 3-Methacryloxypropyltrimethoxysilan, wobei letzteres bevorzugt bei einer Temperatur von -10°C bis 0°C innerhalb 30 min zugegeben wird. Nach der Nachreaktion, Waschen und Destillation wird 3-Methacryloxypropyltris-(trimethylsiloxysilan) erhalten mit einer Reinheit von 90,2-97,8%. Das Produkt ist verunreinigt mit Monohydroxy-Nebenprodukt und Dimer-Nebenprodukt (difunktionelles Disiloxan). Neben dem hohen Gehalt der genannten Verunreinigungen (insbes. difunktionelles Disiloxan) besteht ein wesentlicher Nachteil des Verfahrens darin, dass nach der eigentlichen Reaktion ein langwieriges und daher unwirtschaftliches Altern der Reaktionsmischung bei verschieden Temperaturen über einen Zeitraum von 24 h in Kauf genommen werden muss. Der Alterungsprozess ist ein wesentlicher Bestandteil des Verfahrens, da es während der Reaktion zur Bildung von Monohydroxynebenprodukten kommt, deren Gehalt im Zuge des Alterungsprozesses dadurch reduziert wird, dass die Silanole über eine Dehydratisierung in difunktionelles Disiloxan umgewandelt werden. In diesem Zusammenhang werden Gehalte an difunktionellem Disiloxan bis 10% erhalten, was für eine Reihe von Anwendungen nicht akzeptabel ist.

EP 1510520 A beschreibt die Herstellung von hochreinen verzweigten Siloxanen mit reduziertem Gehalt an Monoorganoxysilan bzw. Monohydroxysilanverunreinigungen in einem zweistufigen Prozess durch Nachreaktion eines verunreinigten Rohprodukts (nach vollständiger oder nach partieller Aufarbeitung bzw. Isolierung) mit Disiloxan und Säure in hoher Ausbeute. Allerdings hat das genannte Verfahren den Nachteil, dass zum einen aufgrund der wässrigen Aufarbeitung sich im sauren Milieu Monohydroxysilan- bzw. Monoorganoxverunreinigungen auch noch weiterhin bilden können. Durch die Nachbehandlung kann der Gehalt an Monoorganoxysilan- bzw. Monohydroxysilanverunreinigung zwar gesenkt werden. Zum anderen besteht der wesentliche Nachteil des Verfahrens darin, dass vor der Nachreaktion das Rohprodukt vollständig oder zumindest teilweise aufgearbeitet werden muss und dass damit die Waschungen, Phasentrennungen (und ggf. auch Destillationen) zweifach durchzuführen sind.

EP 1472264 A beschreibt ein Verfahren zur Herstellung von hochreinen Siliconverbindungen über die Substitution von Alkoxy-, Aryloxy- oder Acyloxy-Gruppen durch Trialkylsiloxyeinheiten. In Gegenwart einer Carbonsäure (Essigsäure), eines sauren Katalysators (CF₃SO₃H), eines Disiloxans (Me₃SiOSiMe₃) wird die Reaktion durch Zugabe eines Alkoxy- oder Aryloxysilans gestartet.

Danach wird ein Carbonsäureanhydrid (z.B. Acetanhydrid) zugegeben. Das Reaktionssystem bleibt weitestgehend einphasig, was die Menge der zur Neutralisation einzusetzenden Base erhöht.

Beispielsweise wird 3-Methacryloxypropyltris(trimethyl-siloxysilan) in hoher Ausbeute mit einer Reinheit von 98,7% erhalten, wobei als Verunreinigungen 1,3% Disiloxan (Dimer) sowie weniger als 0,5% des Monoorganoxysilan-Nebenprodukts CH₂=CH(CH₃)COO-(CH₂)₃-Si(OMe) (OSiMe₃)₃ erhalten werden. Für weitere Produkte werden deutlich geringere Reinheiten (bis 93%) und höhere Gehalte an dimeren Verbindungen gemessen (bis 4, 4%).

Es ist allerdings nicht beschrieben, wie der Gehalt an Monohydroxysilan-Nebenprodukt bis zur Isolierung des Produktes niedrig gehalten werden kann und wie dessen Bildung im Zuge der Aufarbeitung/Neutralisation verhindert werden kann.

Neben der hohen benötigten Menge an Carbonsäureanhydrid liegt der wesentliche Nachteil des genannten Verfahrens darin, dass der Gehalt an difunktionellen Verunreinigungen (Disiloxan) weiterhin über 1 % liegt und bei Verzicht auf eine Destillation noch anorganische und polymere organische Verunreinigungen enthalten sein sollten. Im Falle einer Destillation wäre mit einer signifikant niedrigeren Ausbeute zu rechnen. Insbesondere zur Herstellung elektronischer und optischer Materialien und Bauteile, zur Herstellung von Kontaktlinsen sowie für die Anwendung in funktionellen Beschichtungen ist ein deutlich kleinerer Gehalt an difunktionellen Verunreinigungen erforderlich. In diesen Anwendungen stört insbesondere der Gehalt an difunktionellen Siliconen im polymerisierbaren Silicon, da dieser über eine Steigerung der Vernetzungsdichte eine Modifikation der mechanischen und damit auch der optischen Eigenschaften bzw. der gewünschten Eigenschaften für die Anwendung im Bereich elektronischer Materialien oder funktionaler Beschichtungen auslöst. Restgehalte an Monohydroxy- bzw. Monomethoxy-verunreinigungen können in diesen Anwendungen durch Abspaltungsreaktion bzw. Kondensationsreaktionen zur nachträglichen Veränderung der funktionalen Eigenschaften der Materialien, Bauteile oder Beschichtungen führen. Restgehalte an anorganischen Salzen oder polymere Anteile können zu ungewünschter Lichtstreuung und ungenügender Performance optischer Bauteile führen. In elektronischen Materialien ist in diesem Fall eine signifikante Änderung der Isolationswirkung/Leitfähigkeit und der Durchschlagsfeldstärke zu erwarten. Oberflächeneigenschaften von funktionalen Beschichtungen können durch die genannten Verunreinigungen nachhaltig negativ beeinflusst werden. Es ist daher wesentlich, dass polymerisierbare Silicone in hochreiner Form mit einem minimalen Gehalt an difunktionellen Siliconen, noch-kondensationsreaktiven Siliconen sowie anorganischen Verunreingungen zur Verfügung gestellt werden.

Es bestand die Aufgabe, ein Verfahren zur Herstellung polymerisierbarer Silicone hoher Reinheit bereitzustellen, bei dem die oben beschriebenen Nachteile vermieden werden, und bei dem polymerisierbare Silicone hoher Reinheit mit einem Gehalt von mindestens 98,5 % erhalten werden, die als Nebenprodukte einen Gehalt von weniger als 0,4 % an difunktionellem Disiloxan sowie von weniger als jeweils 0,4 % an Monohydroxy- bzw. Monoalkoxystrukturen aufweisen. Die Aufgabe wird durch die Erfindung gelöst.

Gegenstand der Erfindung ist ein Verfahren zur Herstellung hochreiner polymerisierbarer Silicone der Formel

P-Y-SP-Si(R²)ₙ(OSiR¹₃)₍₃₋ₙ₎ (I)

indem
(a) Disiloxan (1) der Formel

   (R¹)₃SiOSi(R¹)₃ (II)

   in Gegenwart von Essigsäure (2), Schwefelsäure (3), bevorzugt konzentrierter Schwefelsäure, und gegebenenfalls saurem Katalysator (4) vorgelegt wird,
(b) bei einer Temperatur von -20° bis 0°C ein substituiertes Alkoxysilan (5) der Formel

   P-Y-Sp-Si(R²)ₙ(OR³)₍₃₋ₙ₎ (III)

   zudosiert wird,
(c) nach Phasenseparation eine saure Phase (Unterschicht) abgetrennt wird,
(d) 0,02 - 1,0 mol Hexamethyldisilazan (6), bezogen auf 1 Mol Alkoxysilan (5), zugesetzt wird,
(e) nach Abfiltration des entstandenen Salzes die leicht-flüchtigen Bestandteile entfernt werden und das Produkt destilliert wird,
   und gegebenenfalls
(f) das Produkt anschließend filtriert wird,
wobei
R¹ gleich oder verschieden ist und ein Wasserstoffatom oder einen gegebenenfalls substituierten einwertigen Kohlenwasserstoffrest mit 1 bis 18 Kohlenstoffatomen bedeutet,
R² gleich oder verschieden ist und ein Wasserstoffatom oder einen gegebenenfalls substituierten einwertigen Kohlenwasserstoffrest mit 1 bis 18 Kohlenstoffatomen bedeutet,
R³ gleich oder verschieden ist und einen gegebenenfalls mit Alkoxygruppen substituierten Alkylrest mit 1 bis 18 Kohlenstoffatomen bedeutet,
Sp eine Einfachbindung oder einen zweiwertigen Kohlenwasserstoffrest mit 1 bis 8 Kohlenstoffatomen bedeutet,
Y eine Einfachbindung oder -O- bedeutet,
P einen Acryloxy- Methacryloxy- Vinyl- oder Allylrest bedeutet
n 0, 1 oder 2, vorzugsweise 0, ist.
Gegenstand der Erfindung sind weiterhin hochreine polymerisierbare Silicone der Formel

P-Y-Sp-Si(R²)ₙ(OSiR¹₃)₍₃₋ₙ₎ (I) (I)

die eine Reinheit von mindestens 98,5 %, vorzugsweise mindestens 99,0 %,
einen Gehalt von weniger als 0,4 %, vorzugsweise weniger als 0,2 %, an difunktionellem Disiloxan der Formel

[P-Y-Sp-Si(R²)ₙ(OSiR¹₃)₍₂₋ₙ₎]₂O ,

von weniger als 0,4 %, vorzugsweise weniger als 0,3 %, an Monohydroxysilan der Formel

P-Y-Sp-Si(R²)ₙ(OH)(OSiR¹₃)₍₂₋ₙ₎

und weniger als 0,4 %, vorzugsweise weniger als 0,3 %, an Monoalkoxysilan der Formel

P-Y-Sp-Si(R²)ₙ(OR³)(OSiR¹₃)₍₂₋ₙ₎

aufweisen,
wobei R¹, R², R³, Sp, Y, P und n die oben dafür angegebene Bedeutung haben.

Beispiele für R¹ sind Alkyl-, Alkenyl-, Alkinyl- und Arylreste mit 1-18 Kohlenstoffatomen, vorzugsweise 1-15 Kohlenstoffatomen, bevorzugt 1-9 Kohlenstoffatomen. Beispiele für R¹ sind Alkylreste, wie der Methyl-, Ethyl-, n-Propyl-, Isopropyl-, n-Butyl-, Isobutyl-, tert.-Butyl-, n-Pentyl-, n-Hexyl-, und n-Octylrest; Cycloalkylreste, wie der Cyclopentyl- und Cyclohexylrest; Alkenyl- und Alkinylreste, wie der Vinyl-, Propenyl-, Allyl- und Ethinylrest; und Arylreste, wie der Phenylrest.

Beispiele für R² sind Alkyl-, Alkenyl-, Alkinyl- und Arylreste mit 1-18 Kohlenstoffatomen, vorzugsweise 1-9 Kohlenstoffatomen, bevorzugt 1-6 Kohlenstoffatomen. Beispiele für R² sind Alkylreste, wie der Methyl-, Ethyl-, n-Propyl-, Isopropyl-, n-Butyl-, Isobutyl-, tert.-Butyl-, n-Pentyl-, n-Hexyl-, und n-Octylrest; Cycloalkylreste, wie der Cyclopentyl- und Cyclohexylrest; Alkenyl- und Alkinylreste, wie der Vinyl-, Propenyl-, Allyl- und Ethinylrest; und Arylreste, wie der Phenylrest.

Beispiele für R³ sind gegebenenfalls mit Alkoxygruppen substituierte Alkylreste mit 1 bis 3 Kohlenstoffatomen. Beispiele für R³ sind der Methyl-, Ethyl- und Propylrest.

Beispiele für Sp sind Alkylen- oder Cycloalkylenreste, wie -CH₂-, -CH₂-CH₂- und -CH₂-CH₂-CH₂- Reste, C₄-C₈-Alkylenreste und Cyclohexylenreste.
Y ist bevorzugt -O-.
P ist bevorzugt ein Acryloxy- und Methacryloxyrest.

Beispiele für Disiloxane der Formel (R¹)₃SiOSi(R¹)₃ sind Hexamethyldisiloxan,
Hexaethyldisiloxan,
1,3-Di-tert-butyl-1,1,3,3-tetramethyldisiloxan,
1,1,3,3-Tetramethyl-disiloxan,
1,3-Divinyl-1,1,3,3-tetramethyldisiloxan und
1,3-Diphenyl-1,1,3,3-tetramethyldisiloxan.

Beispiele für Alkoxysilane sind
1-Acryloxymethyltrimethoxysilan
2-Acryloxyethyltrimethoxysilan
3-Acryloxypropyltrimethoxysilan
1-Methacryloxymethyltrimethoxysilan
1-Methacryloxymethyldimethoxymethylsilan
2-Methacryloxyethyltrimethoxysilan
3-Methacryloxypropyltrimethoxysilan
1-Acryloxymethyltriethoxysilan
2-Acryloxyethyltriethoxysilan
3-Acryloxypropyltriethoxysilan
1-Methacryloxymethyltriethoxysilan
2-Methacryloxyethyltriethoxysilan
3-Methacryloxypropyltriethoxysilan
4-Methacryloxybutyltrimethoxysilan
6-Methacryloxyhexyltrimethoxysilan
8-Methacryloxyoctyltrimethoxysilan
Methacryloxycyclohexyltrimethoxysilan
Vinyltrimethoxysilan.

Die verwendeten Alkoxysilane sind bereits mit einer polymerisierbaren Gruppe substituiert. Um eine Polymerisation der polymerisierbaren Gruppe zu vermeiden, ist es auch möglich Alkoxysilane zu verwenden, die bereits mit einem geringen Gehalt eines Stabilisators versehen sind.

Alternativ kann der Reaktionsmischung ein Stabilisator zugesetzt werden (0-5000 ppm, bevorzugt 0-3000 ppm bezogen auf eingesetztes Alkoxysilan).

Beispiele für Stabilisatoren sind
2,6-Di-tert.-butyl-4-methylphenol(BHT),
2,6-Di-tert.-butyl-4-(dimethylaminomethyl)phenol und Phenothiazin.

Besonders bevorzugte Alkoxysilane sind:
3-Methacryloxypropyltrimethoxysilan
1-Methacryloxymethyltrimethoxysilan
1-Methacryloxymethyldimethoxymethylsilan
Vinyltrimethoxysilan

Beispiele für polymerisierbare Silicone der Formel P-Y-Sp-Si(R²)ₙ(OSiR¹₃)₍₃₋ₙ₎ sind
1-Acryloxymethyltris(trimethylsiloxy)silan,
2-Acryloxyethyltris(trimethylsiloxy)silan,
3-Acryloxypropyltris(trimethylsiloxy)silan,
1-Methacryloxymethyltris(trimethylsiloxy)silan,
2-Methacryloxyethyltris(trimethylsiloxy)silan,
3-Methacryloxypropyltris(trimethylsiloxy)silan,
4-Methacryloxybutyltris(trimethylsiloxy)silan,
6-Methacryloxyhexyltris(trimethylsiloxy)silan,
8-Methacryloxyoctyltris(trimethylsiloxy)silan,
Methacryloxycyclohexyltris(trimethylsiloxy)silan,
1-Acryloxymethylbis(trimethylsiloxy)methylsilan,
2-Acryloxyethylbis(trimethylsiloxy)methylsilan,
3-Acryloxypropylbis(trimethylsiloxy)methylsilan,
1-Methacryloxymethylbis(trimethylsiloxy)methylsilan,
2-Methacryloxyethylbis(trimethylsiloxy)methylsilan,
3-Methacryloxypropylbis(trimethylsiloxy)methylsilan,
1-Methacryloxymethyltris(dimethylvinylsiloxy)silan,
3-Methacryloxypropyltris(dimethylvinylsiloxy)silan und
Vinyltris(trimethylsiloxy)silan.

Bevorzugte Beispiele für polymerisierbare Verbindungen P-Y-Sp-Si(R²)ₙ(OSiR¹₃)₍₃₋ₙ₎ sind
3-Acryloxypropyltris(trimethylsiloxy)silan,
3-Methacryloxypropyltris(trimethylsiloxy)silan,
3-Methacryloxypropyltris(dimethylphenylsiloxy)silan,
1-Methacryloxymethyltris(trimethylsiloxy)silan
1-Methacryloxymethylbis(trimethylsiloxy)methylsilan und
Vinyltris(trimethylsiloxy)silan.

Beispiele für Monohydroxysilanverunreinigungen P-Y-Sp-Si(R²)ₙ(OH)(OSiR¹₃)₍₂₋ₙ₎ sind
3-Acryloxypropylbis(trimethylsiloxy)silanol,
3-Methacryloxypropylbis(trimethylsiloxy)silanol,
3-Methacryloxypropylbis(dimethylphenylsiloxy)silanol,
1-Methacryloxymethylbis(trimethylsiloxy)silanol
1-Methacryloxymethyl(trimethylsiloxy)methylsilanol und
Vinylbis(trimethylsiloxy)silanol.

Beispiele für Monoorganoxysilanverunreinigungen P-Y-Sp-Si(R²)ₙ(OR³)(OSiR¹₃)₍₂₋ₙ₎ sind
3-Acryloxypropylbis(trimethylsiloxy)methoxysilan,
3-Methacryloxypropylbis(trimethylsiloxy)methoxysilan,
3-Methacryloxypropylbis(dimethylphenylsiloxy)methoxysilan,
1-Methacryloxymethylbis(trimethylsiloxy)methoxysilan
1-Methacryloxymethyl(trimethylsiloxy)methoxymethylsilanund
Vinylbis(trimethylsiloxy)methoxysilan.

Beispiele für Verunreinigungen mit difunktionellen Disiloxanen der Formel [P-Y-Sp-Si(R²)ₙ(OSiR¹₃)₍₂₋ₙ₎]₂O sind
1,3-Bis(3-acryloxypropyl)-1,1,3,3-tetra(trimethylsiloxy)-disiloxan,
1,3-Bis(3-methacryloxypropyl)-1,1,3,3-tetra(trimethylsiloxy)-disiloxan,
1,3-Bis(1-methacryloxymethyl)-1,1,3,3-tetra(trimethylsiloxy)-disiloxan,
1,3-Bis(1-methacryloxypropyl)-1,1,3,3-tetra(dimethylphenylsiloxy)-disiloxan,
1,3-Bis(3-methacryloxypropyl)-1,3,-bis(trimethylsiloxy)-1,3-dimethyldisiloxan und
1,3-Divinyl-1,1,3,3-tetra(trimethylsiloxy)disiloxan.

Das erfindungsgemäße Verfahren wird im Folgenden genauer beschrieben:
(a) In einem ersten Schritt werden Disiloxane (1) der Formel (R¹)₃SiOSi(R¹)₃ in Gegenwart von Essigsäure (2), Schwefelsäure (3), bevorzugt konzentrierte Schwefelsäure, und gegebenenfalls saurem Katalysator (4) vorgelegt. Das Molmengenverhältnis von Disiloxan (1) und Alkoxysilan (5) liegt dabei vorzugsweise bei 0,5 bis 1,0 mol, bevorzugt 0,6 bis 0,8 mol, Disiloxan (1) je Mol Alkoxygruppe des Alkoxysilans (5).

Das Molmengenverhältnis zwischen Essigsäure (2) und Alkoxysilan (5) beträgt dabei vorzugsweise 1,5 bis 6 Mol, bevorzugt 2 bis 4 mol Essigsäure (2) pro Mol Alkoxysilan (4).

Das Molmengenverhältnis von Schwefelsäure (3) und Alkoxysilan (5) beträgt vorzugsweise 0,1 bis 2 Mol, bevorzugt 0,2 bis 0,75 Mol Schwefelsäure (3) je Mol Alkoxysilan (5).

Als saure Katalysatoren können beispielsweise konzentrierte Salzsäure, Trifluoressigsäure oder Trifluormethansulfonsäure, aber auch Lewissäuren wie AlCl₃ oder TiCl₄ verwendet werden, sofern sie keine Nebenreaktion mit weiteren Substituenten des Alkoxysilans eingehen. Wenn saure Katalysatoren mitverwendet werden, werden 0,001 bis 0,01 mol an saurem Katalysator (4), bezogen auf die Menge an Alkoxysilan eingesetzt.
(b) Die Reaktionsmischung wird auf eine Temperatur von -20°C bis 0°C, vorzugsweise -10°C bis 0°C abgekühlt, um Kondensationsreaktionen unter Bildung von difunktionellen Dimeren zu minimieren.

Im Verfahrensschritt (b) wird bei -20°C bis 0°C, vorzugsweise - 10 bis 0°C, ein substituiertes Alkoxysilan der Formel P-Y-Sp-Si(R²)ₙ(OR³)₍₃₋ₙ₎ zudosiert.

Das Alkoxysilan (5) wird vorzugsweise innerhalb von 1 h - 3 h, bevorzugt 1 h - 2 h, zudosiert und anschließend wird vorzugsweise 1 h bis 4 h , bevorzugt 1 h - 2 h, bei vorzugsweise 10 - 45°C, bevorzugt bei Raumtemperatur, nachreagiert.

Es wird durch dieses Verfahren bereits vor der Aufarbeitung der Gehalt an difunktionellem Disiloxan sowie an Monorganoxysilan begrenzt.

Durch die Schwefelsäure (3) werden gebildetes Wasser und Methanol aus dem Reaktionsgleichgewicht entfernt bzw. die Reaktion des Methanol zu Essigsäuremethylester begünstigt, so dass die Gehalte an Monoorganoxyverunreinigungen minimiert werden. Die Menge der zugesetzten Schwefelsäure sollte nicht überschritten werden, da in diesem Fall die Bildung von dimeren Kondensationsprodukten (difunktionelles Disiloxan) gefördert wird. Ist die Schwefelsäuremenge zu gering, so ist die Minimierung der Gehalte an Monoorganoxyverunreinigungen nicht ausreichend. Eine weitere Rolle spielt die Temperatur bei der Zugabe des Alkoxysilans. Bei erhöhter Temperatur bildet sich in Gegenwart von Schwefelsäure verstärkt difunktionelles Disiloxan (Dimer), das in der folgenden Destillation ggf. nicht mehr ausreichend abgetrennt werden kann.
(c) Ein wesentlicher Vorteil des Verfahrens besteht nun zusätzlich darin, dass nach erfolgter Reaktion die Reaktionsmischung phasensepariert. Es kann eine saure Phase enthaltend Alkohol, wie MeOH, Wasser, Essigsäure, saurer Katalysator abgetrennt werden. Dies bietet zum einen den Vorteil, dass Alkohol, wie MeOH und Wasser für mögliche spätere

Nebenreaktionen abgetrennt werden, zum anderen, dass die Menge des für die Neutralisation zu verwendenden Hexamethyldisilazans minimiert wird.
(d) Nach Reaktion des Disiloxans mit dem Alkoxysilan in Gegenwart von Essigsäure, Schwefelsäure (und optional saurem Katalysator wie Trifluormethansulfonsäure) wird zunächst ein Rohprodukt mit einem minimalen Gehalt an Nebenprodukten erhalten. Um zu verhindern, dass sich im Zuge der Aufarbeitung erneut Nebenprodukte bilden, wird die Reaktionsmischung nach Abtrennung der Unterphase mit Hexamethyldisilazan umgesetzt bzw. nicht-wässrig neutralisiert. Ein weiterer wesentlicher Vorteil der Verwendung von Hexamethyldisilazan ist, dass noch vorhandene Gehalte an Monohydroxysilanen durch diese Behandlung zuverlässig eliminiert werden. Ein potentiell noch vorhandener Gehalt an Monohydroxysilan aus der Reaktion in Gegenwart von Schwefelsäure wird durch diese Behandlung zuverlässig eliminiert.

Um den noch verbliebenen Nebenproduktgehalt an Monohydroxysilan zu minimieren, werden pro Mol Alkoxysilan (5) 0,02-1,0 mol, vorzugsweise 0,1 - 0,8 mol, bevorzugt 0,1 - 0,6 mol, Hexamethyldisilazan (6) zugesetzt und anschließend nachgerührt. Die Dosierung und Nachreaktion erfolgt vorzugsweise innerhalb einer Gesamtdauer von 1 h - 5 h bei vorzugsweise 10°C - 40°C.

Eine Neutralisation der Reaktionsmischung vor der Destillation ist essentiell, um während der späteren Destillation die Neubildung von Nebenprodukten insbesondere difunktionellem Disiloxan durch Verschiebung des Gleichgewichts unter sauren Bedingungen zu vermeiden. Durch den Verzicht auf die Verwendung wässriger Neutralisationsmittel bei Verwendung von Hexamethyldisilazan wird zudem eine nachträgliche Bildung von Monohydroxy- (und Monoorganoxysilanen) als Nebenprodukt vermieden.
(e) Die entstandenen Salze werden abfiltriert, beispielsweise über eine Druckfilternutsche bzw. Zentrifuge und nachgeschaltete Feinfiltration, wobei vorzugsweise ein Sieb/Filter mit einer Maschenweite von 0,2 - 2 µm, bevorzugt 0,2 - 0,5 µm verwendet wird. Um das Produkt während bzw. nach der Destillation zu stabilisieren, ist die Zugabe von Stabilisatoren im Verfahren vor oder nach dem Destillationschritt möglich.

Im Vakuum werden die flüchtigen Bestandteile abgetrennt und nachfolgend das Produkt destilliert. Zur Destillation können neben herkömmlichen Destillationsverfahren ohne/bzw. mit Destillationskolonne auch thermisch schonende Verfahren wie Dünnschichtverdampfung, Kurzwegverdampfung und Vergleichbares eingesetzt werden.

Im Zuge der Destillation erfolgt weiterhin eine zusätzliche Abtrennung von anorganischen Verunreinigungen, z. B. Salzen. Sowohl für die Verarbeitungseigenschaften als auch die Materialeigenschaften des polymerisierbaren Silicons essentiell ist neben einer hohen Reinheit auch der Ausschluss von polymeren Anteilen. Um die Bildung von Polymer in polymerisierbaren Siliconen während deren Synthese zu vermeiden, können Stabilisatoren während der Reaktion oder der Aufarbeitung zugesetzt werden. Aufgrund der inhibierenden Wirkung von Sauerstoff hinsichtlich einer potentiellen radikalischen Polymerisation von Acryl-, Methacryl-, Ethinyl- oder Vinylgruppen, ist es auch möglich, einzelne Verfahrensschritte unter einem Sauerstoffpartialdruck (z.B. Magerluft) durchzuführen. Durch Destillation des Produktes wird zusätzlich die Existenz polymerer Verunreinigungen im Produkt vermieden. Zur Stabilisierung des polymerisierbaren Silicons können für die Lagerung auch nach dessen Isolierung Stabilisatoren zugesetzt werden. Der Gehalt an zugesetztem Stabilisator sollte hierbei vorzugsweise zwischen 100 und 5000 ppm (bzgl. Alkoxysilan (4)), bevorzugt zwischen 200 und 2000 ppm liegen. Beispiele für Stabilisatoren sind 2,6-Di-tert.-butyl-4-methylphenol(BHT), 2,6-Di-tert.-butyl-4-(dimethylaminomethyl)-phenol, und Phenothiazin.
(f) Um eventuell noch vorhandene Salze, Metalle, Partikel abzutrennen, wird das destillierte polymerisierbare Silicon gegebenenfalls nochmals filtriert. Hierzu wird beispielsweise eine Filterkerze mit einer Porengröße von 0,1 - 1 µm, vorzugsweise 0,2-0,5 µm verwendet.

Die nach dem erfindungsgemäßen Verfahren hergestellten polymerisierbaren Silicone besitzen eine hohe Reinheit von mindestens 98,5% und einen niedrigen Gehalt von jeweils weniger als 0,4 % an den Nebenprodukten Monohydroxysilan, Monoorganoxysilan und difunktionellem Disiloxan.

Weiterhin weisen die nach dem erfindungsgemäßen Verfahren hergestellten polymerisierbaren Silicone vorzugsweise einen Salzgehalte von weniger als 200 ppm, bevorzugt von weniger als 150 ppm auf.

Die erfindungsgemäßen polymerisierbaren Silicone werden als Rohstoff bzw. Monomer für die Herstellung elektronischer Materialien, zur Herstellung von Kontaktlinsen und optischen Bauteilen, als Rohstoff in Zusammensetzungen für funktionale und industrielle Beschichtungen, für polymere Mikrostrukturen oder Kosmetikanwendungen verwendet.

### Beispiel 1: 3-Methacryloxypropyltris(trimethylsiloxy)silan

In einem Dreihalskolben werden 75,4 g (0,47 mol) Hexamethyldisiloxan, 39,9 g (0,67 mol) Essigsäure, 8,7 g Schwefelsäure (konz.) (0,09 mol) sowie 0,5 g einer 10%-igen Lösung von Trifluormethansulfonsäure in Essigsäure (0,0003 mol) vorgelegt und bei -15°C bis -5°C gerührt. Bei dieser Temperatur werden 55,0 g (0,22 mol) 3-Methacryloxypropyltrimethoxysilan (WACKER GENIOSIL® GF 31) innerhalb einer Stunde dosiert. Anschließend wird auf Raumtemperatur erwärmt und 2 h nachgerührt. Nach Abtrennung der sauren Unterphase von der organischen Schicht wird die organische Phase mittels GC untersucht: Es finden sich (neben den leichtflüchtigen Bestandteilen): Produkt 49,6 Fl.-%; Monoorganoxyverunreinigung CH₂=CH(CH₃)-COO-(CH₂)₃-Si(OSiMe₃)₂OMe (0,2 Fl.-%); Monohydroxyverunreinigung (CH₂=CH(CH₃)-COO-(CH₂)₃-Si(OSiMe₃)₂OH (0,5 Fl.-%) sowie 0,5 Fl.-% des difunktionellen Disiloxans (Dimeren) [CH₂=CH(CH₃)-COO-(CH₂)₃-Si(OSiMe₃)₂]O.

Zur Reduktion des Gehalts an Monohydroxysilan wird bei Raumtemperatur 18,7 g (0,11 mol) Hexamethyldisilazan zugesetzt (1h) und 1 h nachgerührt.

Nach Umsetzung und Neutralisation mit HMN und Abfiltration des gebildeten Salzes werden im Rohprodukt neben leicht flüchtigen Bestandteilen im GC folgende Bestandteile identifiziert: Produkt (45,5 Fl.-%); Monoorganoxyverunreinigung CH₂=CH(CH₃)-COO-(CH₂)₃-Si(OSiMe₃)₂OMe (0,2 Fl.-%); Monohydroxyverunreinigung CH₂=CH(CH₃)-COO-(CH₂)₃-Si(OSiMe₃)₂OH (0,0 Fl.-%) sowie 0,3 Fl.-% des difunktionellen Disiloxans (Dimeren) [CH₂=CH(CH₃)-COO-(CH₂)₃-Si(OSiMe₃)₂]O.

Nach Abdestillation der leichtsiedenden Komponenten weist das Rohprodukt folgende Reinheiten auf: Produkt (97,8 Fl.-%); Monoorganoxyverunreinigung CH₂=CH(C_{H}3)-COO-(CH₂)₃-Si(OSiMe₃)₂OMe (0, 2 Fl.-%); Monohydroxyverunreinigung CH₂=CH(CH₃)-COO-(CH₂)₃-Si(OSiMe₃)₂OH (0,0 Fl.-%) sowie 0,6 Fl.-% des difunktionellen Disiloxans (Dimeren) [CH₂=CH(CH₃)-COO-(CH₂)₃-Si(OSiMe₃)₂]O.

Nach Destillation und Feinfiltration (Filterkerze) wird das Produkt 3-Methacryloxypropyltris(trimethylsiloxy)silan in 83% iger Ausbeute erhalten, wobei folgende GC-Gehalte ermittelt wurden: Produkt (99,5 Fl.-%); Monoorganoxyverunreinigung CH₂=CH(CH₃)-COO-(CH₂)₃-Si(OSiMe₃)₂OMe (0,2 Fl.-%); Monohydroxyverunreinigung CH₂=CH(CH₃)-COO-(CH₂)₃-Si(OSiMe₃)₂OH (0,0 Fl.-%) sowie 0,0 Fl.-% des difunktionellen Disiloxans (Dimeren) [CH₂=CH(CH₃)-COO-(CH₂)₃-Si(OSiMe₃)₂]O.

Die Ergebnisse sind in der folgenden Tabelle zusammengefasst.

Vergleichsversuch 1:
Die Reaktion wurde analog dem erfindungsgemäßen Beispiel 1 durchgeführt, mit dem Unterschied, dass (analog zu JP 11-217389 Dow Corning Toray) eine deutlich kleinere Menge an Hexamethyldisilazan (0,12g; 0,75 mmol) zugesetzt wurde.

Nach Reaktion und Abtrennung der sauren Unterschicht wird die organische Phase mittels GC untersucht: Es finden sich (neben den leichtflüchtigen Bestandteilen): Produkt (49,1 Fl.-%); Monoorganoxyverunreinigung CH₂=CH(CH₃) -COO-(CH₂)₃-Si(OSiMe₃)₂OMe (0,2 Fl.-%); Monohydroxyverunreinigung CH₂=CH(CH₃)-COO-(CH₂)₃-Si(OSiMe₃)₂OH (0,5 Fl.-%) sowie 0,5 Fl.-% des difunktionellen Disiloxans (Dimeren) [CH₂=CH(CH₃)-COO-(CH₂)₃-Si(OSiMe₃)₂]O.

Nach Umsetzung und Neutralisation mit HMN und Abfiltration des gebildeten Salzes werden im Rohprodukt neben leicht flüchtigen Bestandteilen mittels GC folgende Bestandteile identifiziert: Produkt (51,6 Fl.-%); Monoorganoxyverunreinigung CH₂=CH(CH₃)-COO-(CH₂)₃-Si(OSiMe₃)₂OMe (0,2 Fl.-%); Monohydroxyverunreinigung CH₂=CH(CH₃)-COO-(CH₂)₃-Si(OSiMe₃)₂OH (0, 5 Fl.-%) sowie 0, 3 Fl.-% des difunktionellen Disiloxans (Dimeren) [CH₂=CH(CH₃)-COO-(CH₂)₃-Si(OSiMe₃)₂]O.

Nach Abdestillation der leichtsiedenden Komponenten weist das Rohprodukt folgende Reinheiten auf: Produkt (96,6 Fl.-%); Monoorganoxyverunreinigung CH₂=CH(CH₃)-COO-(CH₂)₃-Si(OSiMe₃)₂OMe (0, 2 Fl.-%); Monohydroxyverunreinigung CH₂=CH(CH₃)-COO-(CH₂)₃-Si(OSiMe₃)₂OH (0,8 Fl.-%) sowie 0,8 Fl.-% des difunktionellen Disiloxans (Dimeren) [CH₂=CH(CH₃)-COO-(CH₂)₃-Si(OSiMe₃)₂]O.

Nach Destillation und Feinfiltration (Filterkerze) wird das Produkt 3-Methacryloxypropyltris(trimethylsiloxy)silan in 72% iger Ausbeute erhalten, wobei folgende GC-Gehalte ermittelt wurden: Produkt (98,4 Fl.-%); Monoorganoxyverunreinigung CH₂-CH(CH₃)-COO-(CH₂)₃-Si(OSiMe₃)₂OMe (0, 2 Fl.-%); Monohydroxyverunreinigung CH₂=CH(CH₃)-COO-(CH₂)₃-Si(OSiMe₃)₂OH (1,0 Fl.-%) sowie 0,0 Fl.-% des difunktionellen Disiloxans (Dimeren) [CH₂=CH(CH₃)-COO-(CH₂)₃-Si(OSiMe₃)₂]O.

Die Ergebnisse sind in der folgenden Tabelle zusammengefasst.

Vergleichsversuch 2 gemäß JP 2000-186095:
Die Reaktion wurde analog dem erfindungsgemäßen Beispiel 1 durchgeführt, mit dem Unterschied, dass kein
   Hexamethyldisilazan zugesetzt wurde, sondern stattdessen nach der Reaktion eine Alterung des Materials (18 h bei 25°C) durchgeführt wurde und nachfolgend die Reaktionsmischung durch fünfmaliges Waschen mit Wasser neutralisiert wurde (analog zu JP 2000-186095, Chisso).

Nach erfolgter Waschung und Phasentrennung wurde die Reaktionsmischung analog dem erfindungsgemäßen Beispiel 1 destilliert.

Nach der primären Reaktion wird die organische Phase mittels GC untersucht: Es finden sich (neben den leichtflüchtigen Bestandteilen: Produkt (48,6 Kl.-%); Monoorganoxyverunreinigung CH₂=CH(CH₃)-COO-(CH₂)₃-Si(OSiMe₃)₂OMe (0, 3 Kl.-%); Monohydroxyverunreinigung CH₂=CH(CH₃) -COO- (CH₂)₃-Si(OSiMe₃)₂OH (0,5 Fl.-%) sowie 0,5 Fl.-% des difunktionellen Disiloxans (Dimeren) [CH₂=CH(CH₃)-COO-(CH₂)₃-Si(OSiMe₃)₂]O.

Die GC-Analyse nach dem Alterungsprozess zeigt:
Produkt (49,2 Fl.-%); Monoorganoxyverunreinigung CH₂=CH(CH₃)-COO-(CH₂)₃-Si(OSiMe₃)₂OMe (0,2 Fl.-%); Monohydroxyverunreinigung CH₂=CH(CH₃)-COO-(CH₂)₃-Si(OSiMe₃)₂OH (0, 5 Fl.-%) sowie 0,6 Fl.-% des difunktionellen Disiloxans (Dimeren) [CH₂=CH(CH₃)-COO-(CH₂)₃-Si(OSiMe₃)₂]O.

Nach der Neutralisation durch mehrmaliges Waschen mit Wasser (incl. Phasentrennung) zeigt das Reaktionsgemisch die folgende Zusammensetzung:Produkt (68,0 Fl.-%);
Monoorganoxyverunreinigung CH₂=CH(CH₃) -COO-(CH₂)₃-Si(OSiMe₃)₂OMe (0, 2 F1.-%); Monohydroxyverunreinigung CH₂=CH(CH₃)-COO-(CH₂)₃-Si(OSiMe₃)₂OH (0,5 Fl.-%) sowie 0,9 Fl.-% des difunktionellen Disiloxans (Dimeren) [CH₂=CH(CH₃)-COO-(CH₂)₃-Si(OSiMe₃)₂]O.

Nach Abdestillation der leichtsiedenden Komponenten weist das Rohprodukt folgende Reinheiten auf: Produkt (97,3 Fl.-%); Monoorganoxyverunreinigung CH₂=CH(CH₃)-COO-(CH₂)₃-Si(OSiMe₃)₂OMe (0,2 Fl.-%); Monohydroxyverunreinigung CH₂=CH(CH₃)-COO-(CH₂)₃-Si(OSiMe₃)₂OH (0,8 Fl.-%) sowie 1,2 Fl.-% des difunktionellen Disiloxans (Dimeren) [CH₂=CH(CH₃)-COO-(CH₂)₃-Si(OSiMe₃)₂]O.

Nach Destillation und Feinfiltration (Filterkerze, 0,2 µm) wird das Produkt 3-Methacryloxypropyltris(trimethylsiloxy)silan in 75% iger Ausbeute erhalten, wobei folgende GC-Gehalte ermittelt wurden: Produkt (98,2 Fl.-%); Monoorganoxyverunreinigung CH₂=CH(CH₃)-COO-(CH₂)₃-Si(OSiMe₃)₂OMe (0, 3 Fl.-%); Monohydroxyverunreinigung (CH₂=CH(CH₃)-COO-(CH₂)₃-Si(OSiMe₃)₂OH (0,9 Fl.-%) sowie 0,0 Fl.-% des difunktionellen Disiloxans (Dimeren) [CH₂=CH(CH₃)-COO-(CH₂)₃-Si(OSiMe₃)₂]O.

Die Ergebnisse sind in der Tabelle zusammengefasst.

Vergleichsversuch 3 gemäß JP 11-217389:
Die Reaktion wurde analog dem erfindungsgemäßen Beispiel 1 durchgeführt, mit dem Unterschied, dass sie bei einer Temperatur von 45°C anstelle einer Temperatur bei -15°C bis -5°C durchgeführt wurde. Nach erfolgter Reaktion und Abtrennung der sauren Unterphase von der organischen Schicht wird die organische Phase mittels GC untersucht: Es finden sich (neben den leichtflüchtigen Bestandteilen): Produkt 43,5 Fl.-%;
Monoorganoxyverunreinigung CH₂=CH(CH₃)-COO-(CH₂)₃-Si(OSiMe₃)₂OMe (0,5 Fl.-%); Monohydroxyverunreinigung (CH₂=CH(CH₃)-COO-(CH₂)₃-Si(OSiMe₃)₂OH (0, 9 Fl.-%) sowie 6,7 Fl.-% des difunktionellen Disiloxans (Dimeren) [CH₂=CH(CH₃)-COO-(CH₂)₃-Si(OSiMe₃)₂]O.

Zur Reduktion des Gehalts an Monohydroxysilan wird bei Raumtemperatur 18,7 g (0,11 mol) Hexamethyldisilazan zugesetzt (1h) und 1 h nachgerührt.

Nach Umsetzung und Neutralisation mit HMN und Abfiltration des gebildeten Salzes werden im Rohprodukt neben leicht flüchtigen Bestandteilen im GC folgende Bestandteile identifiziert:
Produkt (41,9 Fl.-%); Monoorganoxyverunreinigung CH₂=CH(CH₃)-COO-(CH₂)₃-Si(OSiMe₃)₂OMe (0, 5 Fl.-%); Monohydroxyverunreinigung CH₂=CH(CH₃)-COO-(CH₂)₃-Si(OSiMe₃)₂OH (0, 1 Fl.-%) sowie 6, 9 Fl.-% des difunktionellen Disiloxans (Dimeren) [CH₂=CH(CH₃)-COO-(CH₂)₃-Si(OSiMe₃)₂]O.

Nach Abdestillation der leichtsiedenden Komponenten weist das Rohprodukt folgende Reinheiten auf: Produkt (89,8 Fl.-%); Monoorganoxyverunreinigung CH₂=CH(CH₃)-COO-(CH₂)₃-Si(OSiMe₃)₂OMe (0, 8 Fl.-%); Monohydroxyverunreinigung CH₂=CH(CH₃)-COO-(CH₂)₃-Si(OSiMe₃)₂OH (0,1 Fl.-%) sowie 7,1 Fl.-% des difunktionellen Disiloxans (Dimeren) [CH₂=CH(CH₃)-COO-(CH₂)₃-Si(OSiMe₃)₂]O.

Nach Destillation und Feinfiltration (Filterkerze) wird das Produkt 3-Methacryloxypropyltris(trimethylsiloxy)silan in 71% iger Ausbeute erhalten, wobei folgende GC-Gehalte ermittelt wurden: Produkt (96,9 Fl.-%); Monoorganoxyverunreinigung CH₂=CH(CH₃)-COO-(CH₂)₃-Si(OSiMe₃)₂OMe (0, 7 Fl.-%); Monohydroxyverunreinigung CH₂=CH(CH₃)-COO-(CH₂)₃-Si(OSiMe₃)₂OH (0,1 Fl.-%) sowie 0,7 Fl.-% des difunktionellen Disiloxans (Dimeren) [CX₂=CH(CH₃)-COO-(CH₂)₃-Si(OSiMe₃)₂]O.

Die Ergebnisse sind in der folgenden Tabelle zusammengefasst.

**Tabelle:**

| | Beispiel 1 | Vergleich 1 | Vergleich 2 | Vergleich 3 |
|---|---|---|---|---|
| nach Reaktion bei | -15°C bis | -15°C bis | -15°C bis | 45 °C |
| | -5°C | -5°C | -5°C | |
| Gehalt Monoorganoxy | 0,2 % | 0,2 % | 0,3 % | 0,5 |
| Gehalt Monohydroxy | 0,5 % | 0,5 % | 0,5 % | 0,9 |
| Gehalt Disiloxan | 0,5 % | 0,5 % | 0,5 % | 6,7 |
| Gehalt Produkt | 49,6 % | 49,1 % | 48,6 % | 43,5 |
| Alterung | keine | keine | 18 h (25°C) | keine |
| Gehalt Monoorganoxy | | | 0,2 % | |
| Gehalt Monohydroxy | | | 0,5 % | |
| Gehalt Disiloxan | | | 0,6 % | |
| Gehalt Produkt | | | 49,2 % | |
| Abtrennung Sauerphase | ja | ja | bei | |
| | | | Neutralisation | |
| Neutralisation | HMN | HMN | H2O | HMN |
| Molverhältnis [HMN/Alkoxysilan] | 0,5 | 0,003 | - | 0,5 |
| Gehalt Monoorganoxy | 0,2 % | 0,2 % | 0,2 % | 0,5 |
| Gehalt Monohydroxy | 0,0 % | 0,5 % | 0,5 % | 0,1 |
| Gehalt Disiloxan | 0,3 % | 0,3 % | 0,9 % | 6,9 |
| Gehalt Produkt | 45,5 % | 51,6 % | 68,0 % | 41,9 |
| Produkt nach Abdestillation der Leichtsieder | | | | |
| Gehalt Monoorganoxy | 0,2 % | 0,2 % | 0,2 % | 0,8 |
| Gehalt Monohydroxy | 0,0 % | 0,8 % | 0,8 % | 0,1 |
| Gehalt Disiloxan | 0,6 % | 0,8 % | 1,2 % | 7,1 |
| Gehalt Produkt | 97, 8 % | 96,6 % | 97,3 % | 89,8 |
| Endprodukt nach Destillation und Filtration | | | | |
| Gehalt Monoorganoxy | 0,2 % | 0,2 % | 0,3 % | 0,7 |
| Gehalt Monohydroxy | 0,0 % | 1,0 % | 0,9 % | 0,1 |
| Gehalt Disiloxan | 0,0 % | 0,0 % | 0,0 % | 0,7 |
| Gehalt Produkt | 99,5 % | 98,4 % | 98,2 % | 96,9 |
| Ausbeute | 83 % | 72 % | 75 % | 71 |

### Beispiel 2: 1-Methacryloxymethyltris(trimethylsiloxy)silan

Die Reaktion wurde analog dem erfindungsgemäßen Beispiel 1 durchgeführt, mit dem Unterschied, dass an Stelle von 55,0 g (0,22 mol) 3-Methacryloxypropyltrimethoxysilan (WACKER GENIOSIL® GF 31) 48,8 g (0,22 mol) 1-Methacryloxymethyltrimethoxysilan (WACKER GENIOSIL® XL 33) verwendet wurde. Das gewünschte Produkt wird schließlich in einer Ausbeute von 78% erhalten. (GC-Reinheit: 99,2% 1-Methacryloxymethyltris(trimethylsiloxy)silan (0,2 Fl.-% Monoorganoxysilan). Monohydroxyverunreinigung bzw. difunktionelles Disiloxan sind nicht mehr nachweisbar.

### Beispiel 3: 1-Methacryloxymethylbis(trimethylsiloxy)methylsilan

Das Vorgehen ist analog Beispiel 1. Statt 55,0 g (0,22 mol) 3-Methacryloxypropyltrimethoxysilan (WACKER GENIOSIL® GF 31) werden im vorliegenden Beispiel 44,9 g (0,22 mol) an 1-Methacryloxymethyldimethoxymethylsilan(WACKER GENIOSIL® XL 32) sowie lediglich 56,7 g (0,35 mol) Hexamethyldisiloxan eingesetzt. Das gewünschte Produkt wird schließlich in einer Ausbeute von 81% erhalten. GC-Reinheit: 99,4% 1-Methacryloxy-methylbis(trimethylsiloxy)methylsilan (0,1 Fl.-% Monoorganoxysilan). Monohydroxyverunreinigung bzw. difunktionelles Disiloxan sind nicht mehr nachweisbar.

### Beispiel 4: Vinyltris(trimethylsiloxy)silan

Das Vorgehen ist analog Beispiel 1. Statt 55,0 g (0,22 mol) 3-Methacryloxypropyltrimethoxysilan (WACKER GENIOSIL® GF 31) werden im vorliegenden Beispiel 32,6 g (0,22 mol) an Vinyltrimethoxysilan eingesetzt. Das gewünschte Produkt wird schließlich in einer Ausbeute von 83% erhalten. GC-Reinheit: 99,3% Vinyltris(trimethylsiloxy)silan (0,2 Fl.-% Monoorganoxysilan). Monohydroxyverunreinigung bzw. difunktionelles Disiloxan sind nicht mehr nachweisbar.

## Patentansprüche

1. Verfahren zur Herstellung hochreiner polymerisierbarer Silicone der Formel
P-Y-Sp-Si(R²)ₙ(OSiR¹₃)_{{3-n}} (I)
indem
(a) Disiloxan (1) der Formel
(R¹)₃SiOSi(R¹)₃ (II)
in Gegenwart von Essigsäure (2), Schwefelsäure (3), bevorzugt konzentrierter Schwefelsäure, und gegebenenfalls saurem Katalysator (4) vorgelegt wird,
(b) bei einer Temperatur von -20° bis 0°C ein substituiertes Alkoxysilan (5) der Formel
P-Y-Sp-Si(R²)ₙ(OR³)₍₃₋ₙ₎ (III)
zudosiert wird,
(c) nach Phasenseparation eine saure Phase (Unterschicht) abgetrennt wird,
(d) 0,02 - 1,0 mol Hexamethyldisilazan (6), bezogen auf 1 Mol Alkoxysilan (5), zugesetzt wird,
(e) nach Abfiltration des entstandenen Salzes die leicht-flüchtigen Bestandteile entfernt werden und das Produkt destilliert wird,
und gegebenenfalls
(f) das Produkt anschließend filtriert wird,
wobei
R¹ gleich oder verschieden ist und ein Wasserstoffatom oder einen gegebenenfalls substituierten einwertigen Kohlenwasserstoffrest mit 1 bis 18 Kohlenstoffatomen bedeutet,
R² gleich oder verschieden ist und ein Wasserstoffatom oder einen gegebenenfalls substituierten einwertigen Kohlenwasserstoffrest mit 1 bis 18 Kohlenstoffatomen bedeutet,
R³ gleich oder verschieden ist und einen gegebenenfalls mit Alkoxygruppen substituierten Alkylrest mit 1 bis 18 Kohlenstoffatomen bedeutet,
Sp eine Einfachbindung oder einen zweiwertigen Kohlenwasserstoffrest mit 1 bis 8 Kohlenstoffatomen bedeutet,
Y eine Einfachbindung oder -O- bedeutet,
P einen Acryloxy-,Methacryloxy-, Vinyl- oder Allylrest bedeutet
n 0, 1 oder 2, vorzugsweise 0, ist.

2. Verfahren nach Anspruch 1, **dadurch gekennzeichnet, dass** das Molmengenverhältnis von Disiloxan (1) und Alkoxysilan (5) 0,5 bis 1,0 mol, bevorzugt 0,6 bis 0,8 mol, Disiloxan (1) je Mol Alkoxygruppe des Alkoxysilans(5) beträgt.

3. Verfahren nach Anspruch 1 oder 2, **dadurch gekennzeichnet, dass** im Verfahrensschritt (b) das Alkoxysilan (5) innerhalb von 1 h - 3 h zudosiert wird und anschließend 1 h - 4 h bei 10°C - 45°C nachreagiert wird.

4. Verfahren nach Anspruch 1, 2 oder 3, **dadurch gekennzeichnet, dass** als Alkoxysilan (5) 3-Methacryloxypropyltrimethoxysilan eingesetzt wird.

5. Verfahren nach einem der Ansprüche 1 bis 4, **dadurch gekennzeichnet, dass** als Disiloxan (1) Hexamethyldisiloxan eingesetzt wird.

6. Verfahren nach einem der Ansprüche 1 bis 5, **dadurch gekennzeichnet, dass** das Verfahren in Gegenwart eines Stabilisators durchgeführt wird oder ein Stabilisator vor oder nach der Destillation eingesetzt wird.

7. Verfahren nach einem der Ansprüche 1 bis 6, **dadurch gekennzeichnet, dass** ein oder mehrere Verfahrensschritte unter Sauerstoffdruck durchgeführt werden.

## Claims

1. Method for the production of high-purity polymerizable silicones of the formula
P-Y-Sp-Si(R²)ₙ(OSiR¹₃)₍₃₋ₙ₎ (I)
by
(a) initially introducing disiloxane (1) of the formula
(R¹)₃SiOSi(R¹)₃ (II)
in the presence of acetic acid (2), sulfuric acid (3), preferably concentrated sulfuric acid, and optionally acidic catalyst (4),
(b) at a temperature of from -20° to 0°C, metering in a substituted alkoxysilane (5) of the formula
P-Y-Sp-Si(R²)ₙ(OR³)₍₃₋ₙ₎, (III)
(c) following phase separation, separating off an acid phase (lower layer),
(d) adding 0.02 - 1.0 mol of hexamethyldisilazane (6), based on 1 mol of alkoxysilane (5),
(e) after filtering off the resulting salt removing the readily volatile constituents and distilling the product,
and optionally
(f) then filtering the product,
where
R¹ is identical or different and is a hydrogen atom or an optionally substituted monovalent hydrocarbon radical having 1 to 18 carbon atoms,
R² is identical or different and is a hydrogen atom or an optionally substituted monovalent hydrocarbon radical having 1 to 18 carbon atoms,
R³ is identical or different and is an alkyl radical having 1 to 18 carbon atoms which is optionally substituted with alkoxy groups,
Sp is a single bond or a divalent hydrocarbon radical having 1 to 8 carbon atoms,
Y is a single bond or -O-,
P is an acryloxy, methacryloxy, vinyl or allyl radical,
n is 0, 1 or 2, preferably 0.

2. Method according to Claim 1, **characterized in that** the quantitative molar ratio of disiloxane (1) and alkoxysilane (5) is 0.5 to 1.0 mol, preferably 0.6 to 0.8 mol, of disiloxane (1) per mole of alkoxy group of the alkoxysilane (5).

3. Method according to Claim 1 or 2, **characterized in that,** in process step (b), the alkoxysilane (5) is metered in over the course of 1 h - 3 h and is then post-reacted at 10°C - 45°C for 1 h - 4 h.

4. Method according to Claim 1, 2 or 3, **characterized in that** the alkoxysilane (5) used is 3-methacryloxypropyltrimethoxysilane.

5. Method according to any one of Claims 1 to 4, **characterized in that** the disiloxane (1) used is hexamethyldisiloxane.

6. Method according to any one of Claims 1 to 5, **characterized in that** the method is carried out in the presence of a stabilizer or a stabilizer is used before or after the distillation.

7. Method according to any one of Claims 1 to 6, **characterized in that** one or more process steps are carried out under oxygen pressure.

## Revendications

1. Procédé pour la préparation de silicones polymérisables très purs, de formule
P-Y-Sp-Si(R²)ₙ(OSiR¹₃)₍₃₋ₙ₎ (I)
par
(a) disposition au préalable d'un disiloxane (1) de formule
(R¹)₃SiOSi(R¹)₃ (II)
en présence d'acide acétique (2), d'acide sulfurique (3), de préférence d'acide sulfurique concentré et éventuellement d'un catalyseur acide (4),
(b) addition dosée, à une température de -20° à 0 °C, d'un alcoxysilane substitué (5) de formule
P-Y-Sp-Si(R²)ₙ(OR³)₍₃₋ₙ₎, (III)
(c) après séparation des phases, élimination d'une phase acide (couche inférieure),
(d) addition de 0,02 - 1,0 mole d'hexaméthyldisilazane (6), par rapport à 1 mole d'alcoxysilane (5),
(e) après séparation par filtration du sel formé, élimination des composants aisément volatils et
distillation du produit
et éventuellement
(f) ensuite filtration du produit,
R¹ étant le même ou différent et représentant un atome d'hydrogène ou un radical hydrocarboné monovalent éventuellement substitué ayant de 1 à 18 atomes de carbone,
R² étant le même ou différent et représentant un atome d'hydrogène ou un radical hydrocarboné monovalent éventuellement substitué ayant de 1 à 18 atomes de carbone,
R³ étant le même ou différent et représentant un radical alkyle ayant de 1 à 18 atomes de carbone, éventuellement substitué par des groupes alcoxy,
Sp représentant une simple liaison ou un radical hydrocarboné divalent ayant de 1 à 8 atomes de carbone,
Y représentant une simple liaison ou -O-,
P représentant un radical acryloxy, méthacryloxy, vinyle ou allyle,
n étant 0, 1 ou 2, de préférence 0.

2. Procédé selon la revendication 1, **caractérisé en ce que** le rapport des quantités molaires du disiloxane (1) et de l'alcoxysilane (5) vaut de 0,5 à 1,0 mole, de préférence de 0,6 à 0,8 mole, de disiloxane (1) par mole de groupe alcoxy de l'alcoxysilane (5).

3. Procédé selon la revendication 1 ou 2, **caractérisé en ce que** dans l'étape (b) du procédé l'alcoxysilane (5) est ajouté par addition dosée en l'espace de 1 h - 3 h et ensuite post-réagit pendant 1 h - 4 h à 10°C - 45 °C.

4. Procédé selon la revendication 1, 2 ou 3, **caractérisé en ce qu'**on utilise comme alcoxysilane (5) du 3-méthacryloxypropyltriméthoxysilane.

5. Procédé selon l'une quelconque des revendications 1 à 4, **caractérisé en ce qu'**on utilise comme disiloxane (1) de l'hexaméthyldisiloxane.

6. Procédé selon l'une quelconque des revendications 1 à 5, **caractérisé en ce que** le procédé est effectué en présence d'un stabilisant ou on utilise un stabilisant avant ou après la distillation.

7. Procédé selon l'une quelconque des revendications 1 à 6, **caractérisé en ce qu'**une ou plusieurs étapes du procédé sont effectuées sous une pression d'oxygène.
